# DEMANDE DE BREVET EUROPEEN

(11) **EP 0 773 654 A1**
(43) Date de publication de la demande: **14.05.1997**
(21) Numéro de dépôt: 96402367.5
(22) Date de dépôt: 07.11.1996
(51) Int. Cl.: H04L 27/22

(54) **Etage de démodulation directe d'un signal modulé en quadrature de phase et récepteur comprenant un tel étage de démodulation**

(30) Priorité: 13.11.1995 FR 9513417
(71) Demandeur: ALCATEL TELSPACE, 92734 Nanterre Cédex (FR)
(72) Inventeur: Leclerc, Gérard, 95520 Osny (FR); Comte, Michel, 31530 Sainte Livrade (FR)
(74) Mandataire: Scheer, Luc

(57) **Abrégé**

L'invention concerne un étage de démodulation directe (20) d'un signal modulé en quadrature de phase (RF). L'étage (20) fournit, à partir du signal modulé (RF), deux signaux en bande de base (I, Q).

Selon l'invention, cet étage comporte :
- un coupleur 90° adapté (21) auquel est appliqué le signal modulé (RF) et fournissant deux signaux modulés en quadrature de phase ;
- deux amplificateurs faible bruit (27, 28) de caractéristiques identiques, chacun des amplificateurs (27, 28) recevant l'un des signaux modulés en quadrature de phase et fournissant un signal amplifié ;
- deux mélangeurs (15, 16) recevant chacun d'une part l'un des signaux amplifiés et d'autre part un même signal d'oscillateur local (30), les mélangeurs (15, 16) fournissant les signaux en bande de base (I, Q).

Le coupleur 90° (21), les amplificateurs faible bruit (27, 28) et les deux mélangeurs (15, 16) peuvent être éventuellement intégrés dans un même circuit MMIC.

L'invention s'applique notamment à un récepteur de signaux modulés en quadrature et évasifs en fréquence.

## Description

Le domaine de l'invention est celui de la démodulation de signaux à pluralité d'états de phase et concerne plus précisément un étage de démodulation directe d'un signal modulé en quadrature de phase ainsi qu'un récepteur comprenant un tel étage de démodulation.

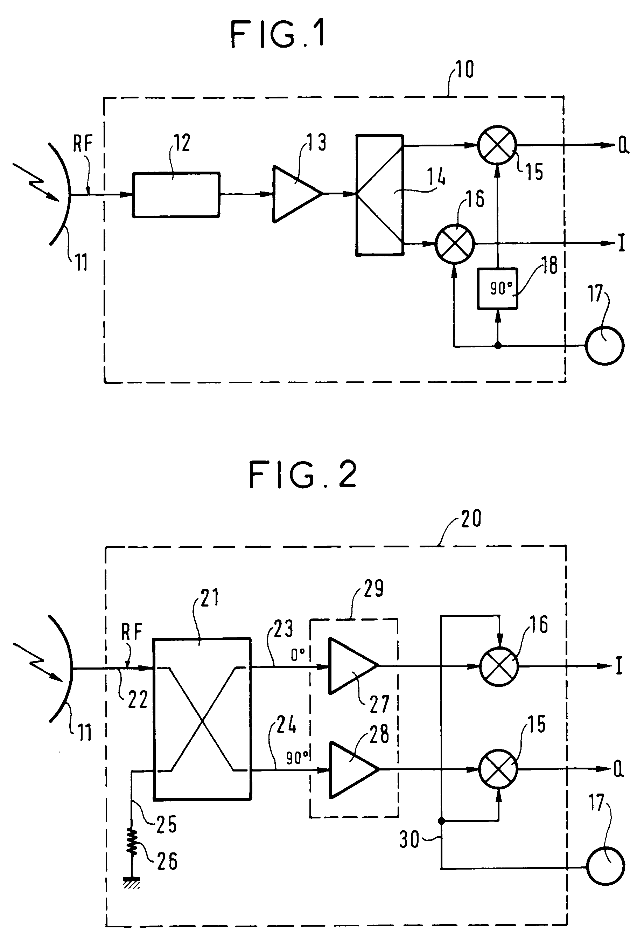

La figure 1 représente un étage de démodulation directe d'un signal modulé en quadrature de phase de l'art connu, le signal modulé étant par exemple un signal radiofréquence RF reçu par une antenne.

L'étage de démodulation de la figure 1, généralement référencé par 10, reçoit en entrée un signal RF modulé capté par une antenne 11. Le signal RF est appliqué à un isolateur 12 suivi par un amplificateur faible bruit 13. Le signal de sortie de l'amplificateur 13 est appliqué à un séparateur de signaux 14 ("splitter" en anglais ou encore diviseur de signaux) présentant deux signaux de sortie identiques atténués de 3 dB par rapport au signal d'entrée de ce séparateur 14. Les signaux de sortie du séparateur 14 sont chacun appliqués à un mélangeur 15, 16. Chaque mélangeur 15, 16 reçoit un signal de démodulation d'un oscillateur local 17, le mélangeur 15 recevant ce signal de démodulation par l'intermédiaire d'un déphaseur de 90° référencé 18. La fréquence du signal de démodulation est égale à la fréquence porteuse du signal RF : il s'agit donc d'une démodulation directe, par opposition à une démodulation en fréquence intermédiaire. Les signaux appliqués aux mélangeurs 15 et 16 (et provenant de l'oscillateur local 17) sont donc en quadrature de phase. Les signaux de sortie I et Q des mélangeurs 15 et 16 sont des signaux en bande de base. Après égalisation de leurs niveaux, numérisation et décision, ils représentent deux signaux numériques transmis par l'émetteur du signal RF.

L'isolateur 12 a une double fonction :
- il réalise une adaptation d'impédance entre l'antenne 11 et l'amplificateur faible bruit 13 (par exemple constitué par un transistor) qui est adapté sur l'impédance optimale de bruit : on cherche à faire fonctionner l'amplificateur 13 dans une zone où il présente le meilleur facteur de bruit, afin d'obtenir le meilleur signal amplifié possible. Cette précaution permet d'obtenir un fonctionnement de l'amplificateur dans une zone linéaire. L'entrée et la sortie de l'isolateur 12 sont typiquement adaptées à 50 Ω.
- il évite une réflexion des signaux reçus en direction de l'antenne 11, afin de maximiser la puissance du signal reçu.

Un des problèmes liés à un tel étage de démodulation est qu'un isolateur classique à faibles pertes présente une bande de fonctionnement très réduite, typiquement de 10 à 15% autour de la fréquence de la porteuse. A titre d'exemple, un isolateur fonctionne par exemple dans une bande de 1 à 2 GHz seulement autour d'une fréquence porteuse de 10 GHz. Il n'est dans ce cas pas possible d'utiliser le même étage de démodulation pour une plus large plage de fréquences du signal RF, c'est à dire que l'agilité en fréquence est limitée à la bande de fréquences de fonctionnement de l'isolateur.

La présente invention a notamment pour objectif de remédier à cet inconvénient.

Plus précisément, un des objectifs de l'invention est de fournir un étage de démodulation d'un signal modulé en quadrature de phase, cet étage fonctionnant dans une bande de fréquences importante, non limitée par la présence d'un isolateur.

Un autre objectif de l'invention est de simplifier la réalisation d'un étage de démodulation tel que celui représenté à la figure 1.

Ces objectifs, ainsi que d'autres qui apparaîtront par la suite, sont atteints grâce à un étage de démodulation directe d'un signal modulé en quadrature de phase, cet étage fournissant, à partir du signal modulé, deux signaux en bande de base, et comportant :
- un coupleur 90° adapté auquel est appliqué le signal modulé et fournissant deux signaux modulés en quadrature de phase ;
- deux amplificateurs faible bruit de caractéristiques identiques, chacun des amplificateurs recevant l'un des signaux modulés en quadrature de phase et fournissant un signal amplifié ;
- deux mélangeurs recevant chacun d'une part l'un des signaux amplifiés et d'autre part un même signal d'oscillateur local, ces mélangeurs fournissant les signaux en bande de base.

Ainsi, l'isolateur de l'état de la technique est remplacé par un coupleur 90° présentant une bande de fréquences de fonctionnement bien plus importante. De plus, comme le signal modulé est divisé par deux, les amplificateurs faible bruit fonctionnent dans des zones plus linéaires. Enfin, la quadrature de phase étant déjà obtenue par le coupleur, le même signal d'oscillateur local peut être directement appliqué aux deux mélangeurs. La réalisation de l'étage de démodulation est ainsi simplifiée et son fonctionnement est plus large bande que celui de l'état de la technique.

Les amplificateurs faible bruit sont préférentiellement intégrés dans un circuit MMIC, ce qui permet de les appairer de manière optimale.

Le coupleur 90° et les deux mélangeurs peuvent être intégrés dans le même circuit MMIC que les amplificateurs faible bruit, ce qui permet d'obtenir une tête de réception d'un signal hyperfréquence compacte et uniquement constituée par un circuit MMIC.

L'invention concerne également un récepteur d'un signal modulé en quadrature de phase comportant un tel étage de démodulation directe.

D'autres caractéristiques et avantages de l'invention apparaîtront à la lecture de la description suivante d'un mode de réalisation préférentiel, donné à titre illustratif et non limitatif, et des dessins annexés dans lesquels :
- la figure 1 représente un étage de démodulation d'un signal modulé de l'art connu ;
- la figure 2 représente un étage de démodulation selon la présente invention.

La figure 1 a été décrite précédemment en référence à l'état de la technique.

La figure 2 représente un étage de démodulation selon la présente invention. Les éléments identiques à ceux de la figure 1 portent les mêmes références.

L'étage de démodulation de la figure 2, généralement référencé par 20, reçoit de l'antenne 11, de même que dans l'état de la technique, un signal RF modulé en quadrature de phase au niveau d'un émetteur. Le signal RF est appliqué à un accès 22 d'entrée d'un coupleur adapté 21 à 90° fournissant deux signaux modulés en quadrature de phase sur ses accès de sortie 23, 24. De manière connue, un coupleur 90° tel que 21 comporte deux voies, une voie directe 22/23 et une voie déphasée 22/24. La voie directe permet d'obtenir sur l'accès 23 un signal de phase identique à celui appliqué à l'accès 22 alors que la voie déphasée fournit un signal déphasé de 90° par rapport à celui appliqué à l'accès 22. Les signaux disponibles sur les accès 23 et 24 sont atténués de 3 dB par rapport à celui appliqué à l'accès 22. On notera que la densité spectrale de puissance du signal ainsi que la densité spectrale de puissance du bruit subissent la même atténuation.

Une charge 26 de 50Ω est placée sur l'accès 25. Cette charge a pour fonction d'absorber les signaux réfléchis par deux amplificateurs faible bruit 27, 28 reliés aux accès 23 et 24 (les amplificateurs 27 et 28 sont généralement non adaptés sur 50Ω car on cherche à exploiter le meilleur facteur de bruit possible). En analysant les phases des signaux réfléchis par les amplificateurs 27 et 28, on constate qu'ils se somment de manière destructive sur l'accès 22 (ils sont en opposition de phase) et l'adaptation d'impédance vis à vis de l'antenne 11 est donc optimale.

Les amplificateurs faible bruit 27 et 28 sont de préférence appairés pour présenter des caractéristiques identiques. Afin d'obtenir ces caractéristiques identiques, on les intègre de préférence dans un circuit MMIC 29. Chacun des amplificateurs 27, 28 fournit un signal amplifié à un mélangeur 15, 16 correspondant. Chacun des mélangeurs 15, 16 reçoit également un même signal de démodulation 30, issu d'un oscillateur local 17. Les signaux de sortie des mélangeurs 15 et 16 sont des signaux en bande de base I et Q.

L'étage de démodulation de l'invention présente de multiples avantages par rapport à celui représenté à la figure 1 :
- un coupleur (21, Fig.2) présente une bande passante bien plus importante que celle d'un isolateur (12, Fig.1), à coût identique ; la bande de fonctionnement est dans ce cas bien plus étendue (d'un facteur supérieur à 2, typiquement compris entre 2 et 4) ;
- l'adaptation d'impédance au niveau de l'antenne 11 est automatique en raison de la sommation destructive des signaux réfléchis par les amplificateurs faible bruit 27 et 28 au niveau de l'accès 22 ;
- comme le signal RF reçu est divisé par deux, les amplificateurs faible bruit 27 et 28 fonctionnent dans une zone plus linéaire (gain théorique de 3 dB auquel il faut enlever 0,1 ou 0,2 dB de pertes résistives dans le coupleur 21) et le rapport signal à bruit est maintenu constant sur chaque voie ;
- la démodulation directe est obtenue sans déphaseur de 90° (18, Fig.1) supplémentaire ;
- les amplificateurs faible bruit peuvent être intégrés dans un circuit MMIC dont le coût est quasiment identique qu'il contienne un ou deux amplificateurs ;
- le coupleur 90° référencé 21 peut être intégré dans le même circuit MMIC que les amplificateurs faible bruit 27 et 28, et éventuellement les deux mélangeurs 15 et 16 également, ceci pour un coût équivalent. On dispose alors d'une tête de réception hyperfréquence complète entièrement réalisée en technologie MMIC, ce qui ne peut être le cas lorsqu'un isolateur est utilisé (car il faut un matériau magnétique pour réaliser un isolateur). L'étage de démodulation 20 est alors constitué par un circuit MMIC.

L'invention s'applique à tout signal RF modulé selon une constellation à pluralité d'états de phase (MDP-M ou M-PSK en anglais) ou plus généralement à pluralité d'états d'amplitude et de phase (MDAP-M ou M-QAM). L'invention s'applique également à la démodulation de signaux UHF ou VHF. Une application avantageuse de l'invention est la réception de signaux évasifs en fréquence.

On notera qu'en sortie de l'étage de démodulation de l'invention la constellation est inchangée par rapport à celle de l'état de la technique : l'étage de démodulation de l'invention peut donc simplement remplacer un étage existant, aucune adaptation n'étant à apporter.

L'invention concerne également un récepteur d'un signal modulé en quadrature de phase, comportant un étage de démodulation directe tel que décrit ci-dessus.

## Revendications

1. Etage de démodulation directe (20) d'un signal modulé en quadrature de phase (RF), ledit étage (20) fournissant, à partir dudit signal modulé (RF), deux signaux en bande de base (I, Q), caractérisé en ce qu'il comporte :
- un coupleur 90° adapté (21) auquel est appliqué ledit signal modulé (RF) et fournissant deux signaux modulés en quadrature de phase ;
- deux amplificateurs faible bruit (27, 28) de caractéristiques identiques, chacun desdits amplificateurs (27, 28) recevant l'un desdits signaux modulés en quadrature de phase et fournissant un signal amplifié ;
- deux mélangeurs (15, 16) recevant chacun d'une part l'un desdits signaux amplifiés et d'autre part un même signal d'oscillateur local (30), lesdits mélangeurs (15, 16) fournissant lesdits signaux en bande de base (I, Q).

2. Etage de démodulation directe selon la revendication 1, caractérisé en ce que lesdits amplificateurs faible bruit (27, 28) sont intégrés dans un circuit MMIC (29).

3. Etage de démodulation directe selon la revendication 2, caractérisé en ce que ledit coupleur 90° (21) est intégré dans ledit circuit MMIC.

4. Etage de démodulation directe selon l'une des revendications 2 et 3, caractérisé en ce que lesdits mélangeurs (15, 16) sont intégrés dans ledit circuit MMIC.

5. Récepteur d'un signal modulé en quadrature de phase, caractérisé en ce qu'il comporte un étage de démodulation directe (20) selon l'une des revendications 1 à 4.
